# FASCICULE DE BREVET EUROPEEN

(11) **EP 1 251 629 B1**
(45) Date de publication et mention de la délivrance du brevet: **12.09.2012**
(21) Numéro de dépôt: 02290953.5
(22) Date de dépôt: 16.04.2002
(51) Int. Cl.: H02K 29/08, H02K 3/18

(54) **Machine électrique comportant au moins un détecteur de champ magnétique**
Elektrische Maschine mit mindestens einem Magnetfelddetektor
Electrical machine with at least one magnetic field detector

(30) Priorité: 17.04.2001 FR 0105190
(43) Date de publication de la demande: 23.10.2002
(73) Titulaire: MOTEURS LEROY-SOMER, 16000 Angoulême (FR)
(72) Inventeur: Gauthier, Pascal, 16290 Asnières-sur-Nouère (FR); Gilles, Christophe, 16000 Angoulême (FR); Coupart, Eric, 16000 Angoulême (FR); Saint-Michel, Jacques, 16000 Angoulême (FR)
(74) Mandataire: Tanty, François

(56) Documents cités:
- EP-A- 0 438 594
- EP-A- 1 010 660
- US-A- 4 617 725
- US-A- 5 864 192
- US-A- 6 025 665
- PATENT ABSTRACTS OF JAPAN vol. 1995, no. 07, 31 août 1995 (1995-08-31) -& JP 07 107707 A (SHIBAURA ENG WORKS CO LTD), 21 avril 1995 (1995-04-21)

## Description

La présente invention concerne les machines tournantes électriques et plus particulièrement, mais non exclusivement, les moteurs électriques synchrones à aimants permanents.

Il est connu d'utiliser dans les machines à aimants permanents des détecteurs de champ magnétique pour connaître la position du rotor et commander de manière appropriée l'excitation du stator. Ces détecteurs connus comportent un capteur à effet Hall apte à détecter le champ magnétique résultant d'aimants rapportés sur le rotor, donc distincts des aimants servant à générer la force motrice ou électromotrice.

On connaît par les brevets US 5 864 192 et US 6 025 665 un moteur comportant des capteurs à effet Hall et un rotor à aimants permanents.

La demande JP 07 107 707 porte sur un moteur comportant des capteurs à effet Hall.

L'invention vise notamment à simplifier la construction des machines électriques à aimants permanents.

Elle y parvient grâce à une nouvelle machine électrique, telle que définie dans la revendication 1.

Ainsi, dans l'invention, c'est le champ magnétique des aimants qui interagissent avec le stator qui est détecté, de sorte qu'il n'est pas nécessaire de rapporter sur le rotor des aimants destinés uniquement à permettre de connaître l'orientation angulaire du rotor. La fabrication du rotor s'en trouve donc simplifiée.

Les aimants permanents peuvent être engagés entre des pièces polaires et le rotor peut être à concentration de flux.

Lorsque le courant d'alimentation du moteur est polyphasé, à *n* phases, le moteur comporte de préférence *n* détecteurs fixés sur *n* dents du stator, lesquelles sont avantageusement des dents consécutives, ce qui facilite la mise en place des détecteurs, l'accès aux détecteurs et la sortie des conducteurs électriques reliés aux détecteurs, car tous les détecteurs peuvent être regroupés en regard d'une ouïe du carter du moteur.

Dans une réalisation particulière, les détecteurs sont fixés sur une extrémité axiale du circuit magnétique du stator et s'étendent chacun selon l'axe d'une dent.

Chaque détecteur comporte, dans une réalisation particulière, un capteur à effet Hall.

Toujours dans une réalisation particulière, chaque dent reçoit une bobine individuelle, laquelle ménage avec la dent un espace permettant le passage du détecteur ou de conducteurs électriques reliés à ce détecteur.

Chaque bobine individuelle comporte avantageusement un faisceau de fils isolés, ce faisceau étant sensiblement plat et enroulé autour d'un axe géométrique d'enroulement de manière à former une pluralité de spires superposées, la section transversale du faisceau, au niveau des spires superposées, ayant une grande dimension orientée sensiblement perpendiculairement à l'axe d'enroulement de la bobine. Les fils sont de préférence de section circulaire, de diamètre compris par exemple entre 0,3 mm et 2,5 mm. Cette configuration permet de réduire les pertes par hautes fréquences à l'intérieur du cuivre, aux vitesses de rotation élevées du rotor.

L'invention s'applique tout particulièrement à un moteur comportant un rotor à concentration de flux, les aimants permanents étant engagés entre des pièces polaires, le rotor comportant au moins une joue en un matériau amagnétique, le bord radialement extérieur de cette joue s'étendant en retrait du bord radialement extérieur des aimants et des pièces polaires, de manière à ménager une région annulaire dans laquelle le champ magnétique peut être détecté par le ou les détecteurs précités.

Avantageusement, le stator est bobiné sur dents. Dans un stator bobiné sur dents, chaque dent sert de noyau à un enroulement. De plus, le nombre de dents n_{dents} est avantageusement fonction du nombre de paires de pôles nₚₐᵢᵣₑₛ et du nombre de phases nₚₕₐₛₑₛ suivant la formule n_{dents} = nₚₐᵢᵣₑₛ * nₚₕₐₛₑₛ.

La combinaison d'un rotor à concentration de flux et d'un stator bobiné sur dents permet d'avoir une machine puissante sous un faible encombrement, ce qui autorise notamment le montage du moteur en porte-à-faux à l'extrémité d'un arbre, entraînant une diminution du nombre de roulements. Le nombre de dents et de bobines est relativement faible, ce qui contribue à diminuer le prix de revient de la machine.

Les détecteurs peuvent comporter chacun, en plus d'un capteur de champ magnétique, un capteur de température, et l'emplacement du capteur de température, entre la bobine et la dent, permet de donner une bonne image de la température réelle du circuit électrique de la phase correspondante.

Les caractéristiques et avantages de la présente invention ressortiront à la lecture de la description détaillée qui va suivre, d'exemples de réalisation non limitatifs de l'invention, et à l'examen du dessin annexé, ce dernier faisant partie intégrante de la description, sur lequel :
- la figure 1 est une vue schématique en perspective d'un moteur synchrone conforme à un exemple de mise en oeuvre de l'invention,
- la figure 2 est une vue schématique de dessus selon la flèche II de la figure 1,
- la figure 3 est une coupe axiale schématique du moteur selon III-III de la figure 2,
- la figure 4 est une vue agrandie du détail IV de la figure 2,
- la figure 5 représente isolément, en perspective et d'une manière schématique, le stator,
- la figure 6 représente isolément, en perspective, un secteur du circuit magnétique du stator,
- la figure 7 illustre l'assemblage du secteur de la figure 6 avec un secteur identique,
- la figure 8 représente isolément, en perspective, une bobine individuelle,
- la figure 9 est une section selon IX-IX de la figure 8,
- la figure 10 représente de manière schématique un chapelet de bobines utilisé pour la fabrication du stator,
- la figure 11 illustre de manière schématique la mise en place des chapelets de bobines sur le stator, au cours de la fabrication du stator,
- la figure 12 est une vue analogue à la figure 11, très schématique et simplifiée, tous les chapelets ayant été mis en place, pour illustrer le trajet circulaire des câbles d'amenée du courant,
- la figure 13 est une vue schématique de face du rotor,
- la figure 14 représente isolément, en vue de face, l'arbre du rotor,
- la figure 15 est une section axiale schématique selon XV-XV de la figure 14,
- la figure 16 représente isolément, en vue de dessus, une pièce polaire du rotor,
- la figure 17 illustre l'assemblage des pièces polaires sur l'arbre du rotor,
- la figure 18 est une section transversale, schématique, de l'arbre du rotor après mise en place des aimants et des pièces polaires, et
- la figure 19 est un schéma donnant un exemple de connexion électrique des bobines (numérotées de 1 à 12) entre elles.

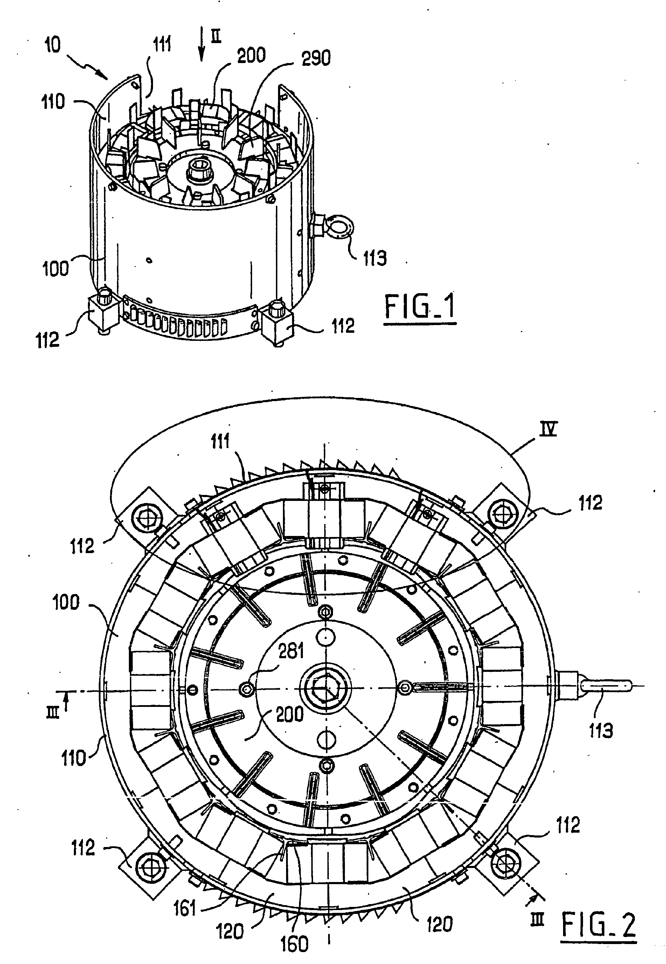

On a représenté aux figures 1 à 4 un moteur synchrone 10 conforme à l'invention, comportant un stator 100 et un rotor 200. Le moteur 10 est sans balais, à rotor à concentration de flux et à stator bobiné sur dents, et fonctionne en courant triphasé.

Le stator 100 comporte un carter 110 en acier, présentant une ouïe latérale 111 pour le passage notamment des conducteurs électriques d'alimentation des enroulements du stator. Le carter est muni, extérieurement, de pattes de fixation 112 et d'un crochet de levage 113.

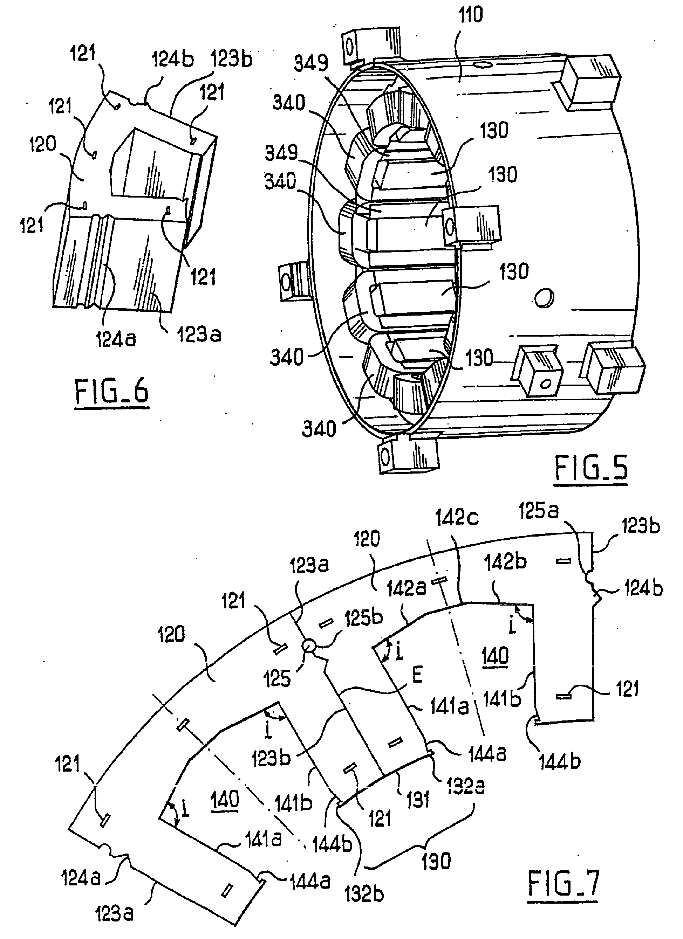

Le stator 100 comporte un circuit magnétique comprenant, dans l'exemple représenté, une pluralité de secteurs 120 identiques, dont l'un d'eux est représenté isolément en perpective à la figure 6.

Chaque secteur 120 est constitué par un paquet de tôles magnétiques identiques superposées et clipsées entre elles de manière à constituer un ensemble unitaire, le clipsage étant obtenu selon une technique connue en elle-même grâce à des déformations ponctuelles de chaque tôle en plusieurs points d'accrochage 121. L'utilisation d'un paquet de tôles magnétiques permet de limiter les pertes par courants induits. En variante, le circuit magnétique du stator pourrait être formé par la superposition de tôles chacune de forme générale annulaire, dans lesquelles seraient découpées toutes les dents 130 du stator. En variante encore, les secteurs pourraient comporter plusieurs dents chacun. Deux secteurs 120 forment, lorsque assemblés, une dent 130 servant au montage d'une bobine individuelle 340, comme on peut le voir sur la figure 5 notamment. Le nombre de dents n_{dents} est dans l'exemple décrit égal à 12, le moteur étant destiné à être alimenté en courant triphasé et le rotor comportant 8 pôles. Bien entendu, le nombre de pôles du rotor pourrait être différent et notamment être égal à 12 ou 16 par exemple. Le stator pourrait encore, bien que cela présente certains inconvénients comme expliqué plus haut, avoir un nombre de dents au stator qui ne soit pas lié au nombre de paires de pôles nₚₐᵢᵣₑₛ du rotor et au nombre de phases nₚₕₐₛₑₛ par la relation n_{dents} = nₚₐᵢᵣₑₛ * nₚₕₐₛₑₛ.

Chaque secteur 120 comporte sur ses côtés 123a et 123b destinés à coopérer avec les secteurs 120 adjacents des reliefs respectifs 124a et 124b. Ces reliefs 124a et 124b présentent des formes complémentaires, avec un profil généralement triangulaire en vue de dessus, l'un en creux l'autre en saillie, avec deux côtés sensiblement rectilignes reliés par un arrondi. La coopération des reliefs 124a et 124b contribue au bon positionnement des secteurs 120 entre eux lors de l'assemblage du circuit magnétique du stator. Chaque secteur 120 comporte également, sur ses côtés 123a et 123b, des gorges 125a et 125b respectives, chacune de section transversale demi-circulaire, situées dans le voisinage des reliefs 124a et 124b, et formant des trous 125 de section circulaire lorsque les secteurs 120 sont assemblés. Ces trous 125 servent au montage de trois détecteurs 190, comme cela sera précisé dans la suite.

On remarquera sur la figure 7 que l'entrefer E, à l'interface entre deux secteurs 120 adjacents, passe par le milieu de la dent 130 correspondante, ce qui permet de réduire les pertes magnétiques puisque le flux magnétique peut circuler sans rencontrer d'entrefer d'une demi-dent à la demi-dent adjacente d'un même secteur 120, lors du fonctionnement de la machine. De plus, les secteurs peuvent être réalisés avec des éléments découpés pratiquement sans chute avec des outils de taille relativement petite, donc capables de grandes cadences.

L'ensemble des secteurs 120 est inséré à force dans le carter cylindrique 110 et la cohésion du circuit magnétique formé par l'ensemble des secteurs 120 est assurée par les forces de compression radiales exercées par le carter 110 sur les secteurs 120, les portées d'appui des secteurs entre eux étant relativement grandes.

Chaque secteur 120 définit une encoche 140 dont les côtés opposés 141a et 141b font chacun un angle i de plus de 90° avec les régions adjacentes 142a et 142b du fond de l'encoche 140, elles-mêmes perpendiculaires aux rayons passant par la ligne de raccordement de la dent concernée avec le fond de l'encoche. Dans l'exemple de réalisation décrit, l'angle i vaut 90,4°, cette valeur n'étant bien entendu qu'un exemple.

Les côtés 123a et 123b des secteurs sont généralement alignés chacun avec un rayon, hormis les reliefs 124a, 124b, 125a et 125b, et la largeur de chaque dent 130 croît légèrement, hormis des découpes 144a ou 144b réalisées à proximité de son extrémité libre 131 tournée vers le rotor, au fur et à mesure que l'on s'éloigne du rotor.

On remarquera à l'examen de la figure 7 que chaque dent 130 ne comporte pas, dans le voisinage de son extrémité libre 131, d'épanouissements polaires, contrairement à un grand nombre de stators connus qui présentent des encoches semi-fermées. Dans l'exemple représenté, les parties d'extrémité 132a et 132b de chaque dent 130, situées entre son extrémité libre 131 et les découpes 144a ou 144b, sont alignées avec les côtés 141a et 141b, respectivement. L'extrémité libre 131 est une portion de cylindre de révolution, de même axe que l'axe de rotation du rotor, et concave vers le rotor.

Le fond de chaque encoche comporte une région médiane 142c reliant les régions 142a et 142b et perpendiculaire à un rayon coupant l'encoche 140 à mi-largeur, représenté en trait discontinu sur la figure 7.

Comme mentionné précédemment, chaque dent 130 reçoit une bobine individuelle 340, occupant dans chaque encoche 140 adjacente à la dent 130 considérée, sensiblement la moitié du volume de cette encoche.

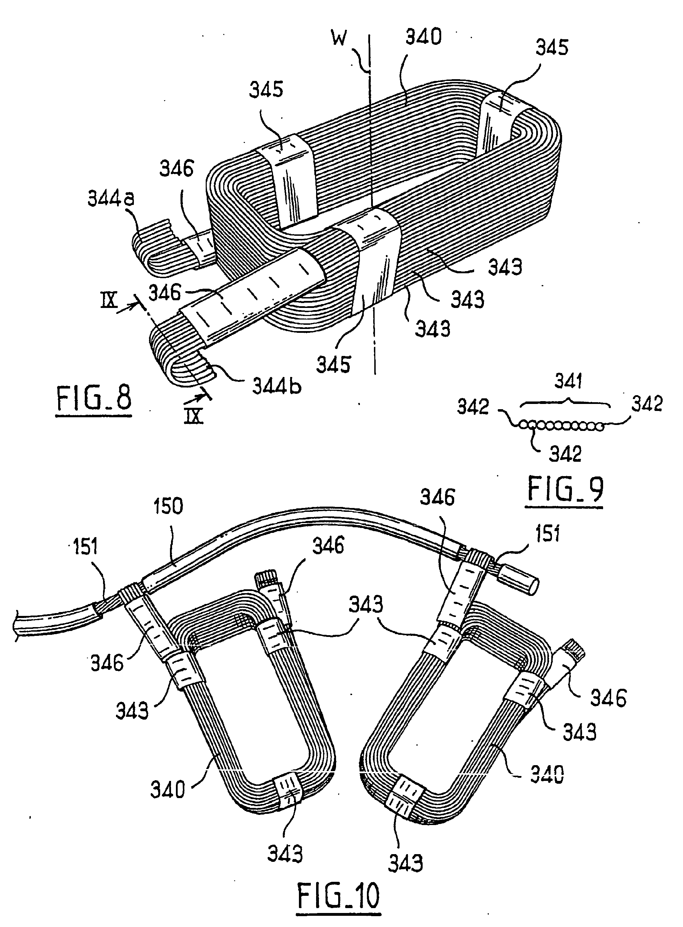

On a représenté isolément à la figure 8 une bobine individuelle 340. Celle-ci est formée par l'enroulement autour d'un axe géométrique d'enroulement W d'un faisceau 341 de fils électriques émaillés 342, ce faisceau étant sensiblement plat en section transversale, comme on peut le voir sur la figure 9.

Lorsque le faisceau 341 est observé en section transversale au niveau des spires, sa plus grande dimension est orientée sensiblement perpendiculairement à l'axe d'enroulement W.

Dans l'exemple considéré, le faisceau 341 comporte dix conducteurs individuels 342, chacun de section circulaire. Le faisceau 341 forme une vingtaine de spires 343 superposées. Les conducteurs 342 sont isolés électriquement les uns des autres au niveau des spires grâce à l'utilisation de fil émaillé. Les conducteurs 342 sont dénudés à leurs extrémités pour former des extrémités de connexion électrique 344a et 344b, recourbées chacune en forme de crochet vers un plan médian de la bobine, perpendiculaire à l'axe d'enroulement W. Ces crochets, à la fin du processus de fabrication de la bobine, sont ouverts vers le corps de celle-ci.

On voit sur la figure 8 que tous les conducteurs 342 de l'extrémité 344a sont recourbés vers le haut puis vers le corps de la bobine tandis que les fils de l'extrémité 344b sont recourbés vers le bas puis vers le corps de la bobine. Les extrémités 344a et 344b ne font sensiblement pas saillie hors du plan des deux faces d'extrémité de la bobine. Les spires qui constituent le corps de la bobine peuvent être maintenues à l'état superposé, avant imprégnation par une résine, par des bandes de toile adhésive 345. Des manchons de gaine isolante 346 sont engagés sur les parties du faisceau 341 s'étendant entre les extrémités 344a et 344b et le corps de la bobine.

La section intérieure de la bobine 340 présente une forme générale rectangulaire, comme on peut le voir sur la figure 10. Les bobines 340 sont bobinées sur des formes comportant deux grandes faces opposées planes faisant entre elles le même angle que les côtés 141a et 141b d'une dent, de sorte que la largeur de la section intérieure de chaque bobine varie sensiblement d'une face d'extrémité à la face opposée. On peut s'en apercevoir en essayant de monter une bobine à l'envers sur une dent 130 du stator 100.

On peut voir sur la figure 10 que les bobines 340 sont reliées électriquement par une extrémité de connexion électrique 344a ou 344b à des conducteurs électriques gainés 150, partiellement dénudés, avant d'être montées sur les dents 130 du stator 100. Les crochets formés par les extrémités 344a et 344b sont par exemple agencés de manière à épouser sensiblement le diamètre extérieur des conducteurs électriques 150 dans les parties dénudées 151. Ces parties dénudées peuvent être formées non seulement aux extrémités des conducteurs électriques 150 mais encore entre ces dernières, par enlèvement sur une longueur limitée de la gaine isolante en matière plastique.

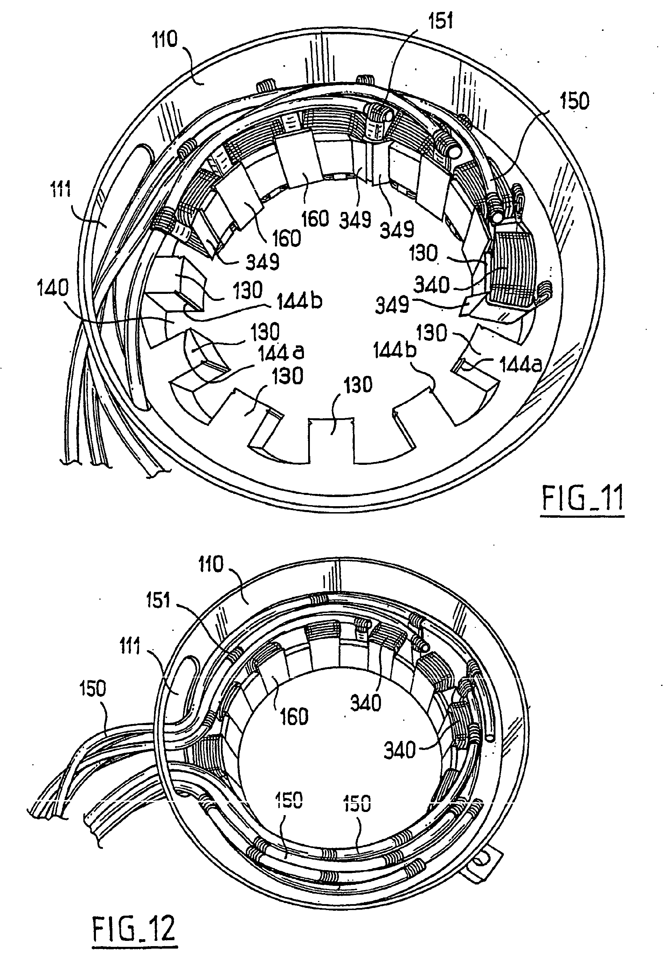

Dans l'exemple décrit, on forme des chapelets de deux bobines 340 qui sont ensuite montés sur les dents 130 correspondantes, comme illustré à la figure 11. Des feuilles 349 d'isolant sont interposées entre les dents et le fond des encoches et les bobines. On peut voir les extrémités de ces feuilles 349 sur les figures 5 et 11.

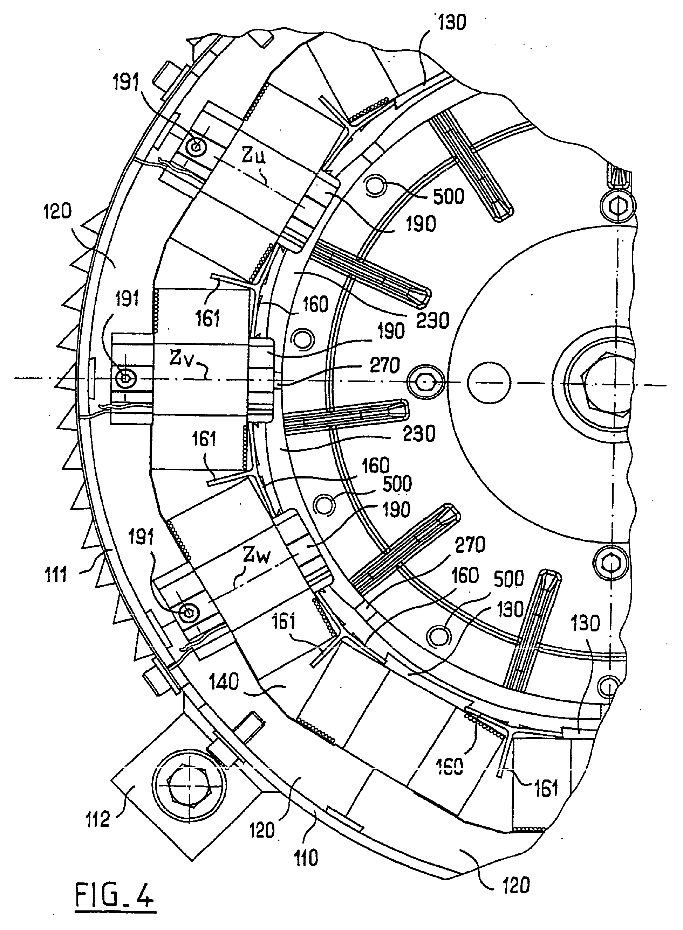

Au fur et à mesure du montage des bobines 340 sur les dents 130, des cales de maintien 160 sont glissées dans les découpes 144a, 144b pour fermer les encoches 140. Ces cales 160 comportent, comme on peut le voir sur la figure 4, des cloisons 161 s'étendant entre les parties des deux bobines 340 logées dans l'encoche 140 concernée.

Une fois toutes les bobines 340 mises en place, les câbles 150 s'étendent suivant des trajets sensiblement circulaires d'un côté du circuit magnétique du stator, en retrait des extrémités libres 131 des dents, comme représenté à la figure 12, ces câbles étant attachés entre eux par des colliers, et l'on procède à l'imprégnation du stator avec une résine isolante, de manière conventionnelle. Le schéma précis de connexion électrique des douze bobines entre elles est donné à la figure 20, mais il ne s'agit que d'un exemple.

On comprend que l'utilisation de bobines individuelles 340 installées de la manière qui vient d'être décrite, sur des dents de largeur non constante, est particulièrement avantageuse car elle facilite grandement le remplacement des bobines 340. En effet, pour remplacer une bobine 340 il suffit, rotor 200 enlevé, de dessouder les extrémités 344a et 344b d'une bobine des portions dénudées 151 correspondantes, d'enlever les cales 160 concernées et d'extraire la bobine 340. Une bobine 340 de remplacement, imprégnée de résine, peut être ensuite mise en place en étant engagée sur la dent 130 précédemment libérée, puis ses extrémités 344a et 344b soudées sur les portions dénudées 151. La convergence des côtés 141a et 141b de la dent 130 vers le rotor et la forme correspondante de la section intérieure de la bobine contribuent à son immobilisation sur la dent 130. La réparation peut se faire sur place, sans avoir à renvoyer la machine chez le fabricant, et sans avoir à procéder à une nouvelle imprégnation du stator, ce qui permet de raccourcir le temps de réparation. Le moteur 10 peut avantageusement être livré avec une ou plusieurs bobines 340 de remplacement.

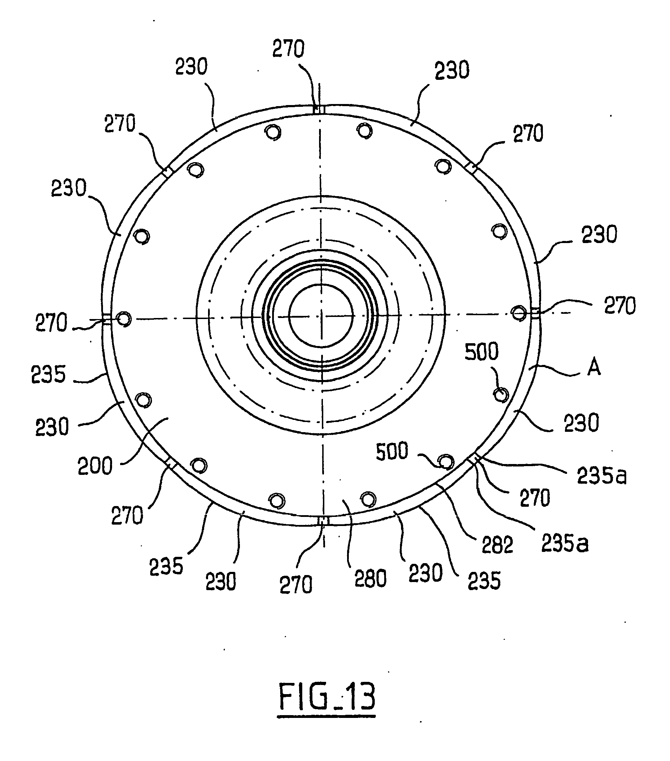

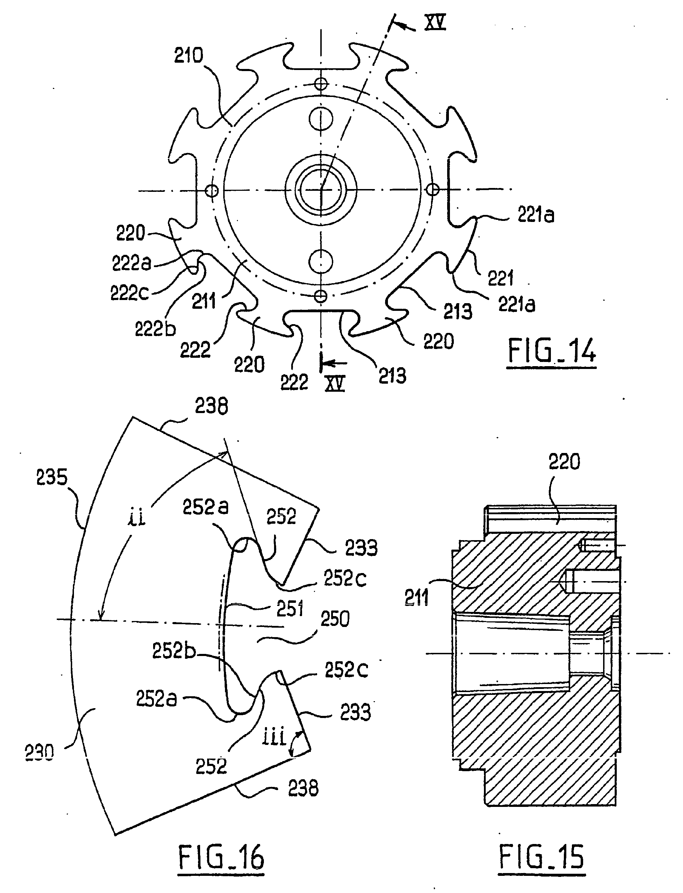

On va maintenant décrire, en référence aux figures 13 à 18, le rotor 200. Celui-ci comporte un arbre amagnétique 210, représenté isolément en vue de face sur la figure 15, comportant une partie centrale 211, de forme générale annulaire, et à sa périphérie une pluralité de nervures 220 servant à l'accrochage de pièces polaires 230 constituées chacune par un paquet de tôles magnétiques identiques superposées et clipsées. L'utilisation de tôles magnétiques superposées permet de réduire les pertes par courants induits. Les nervures 220 présentent en section transversale une forme générale de T. Les pièces polaires 230 ne sont pas reliées magnétiquement entre elles, compte tenu de l'utilisation d'un matériau amagnétique pour réaliser l'arbre.

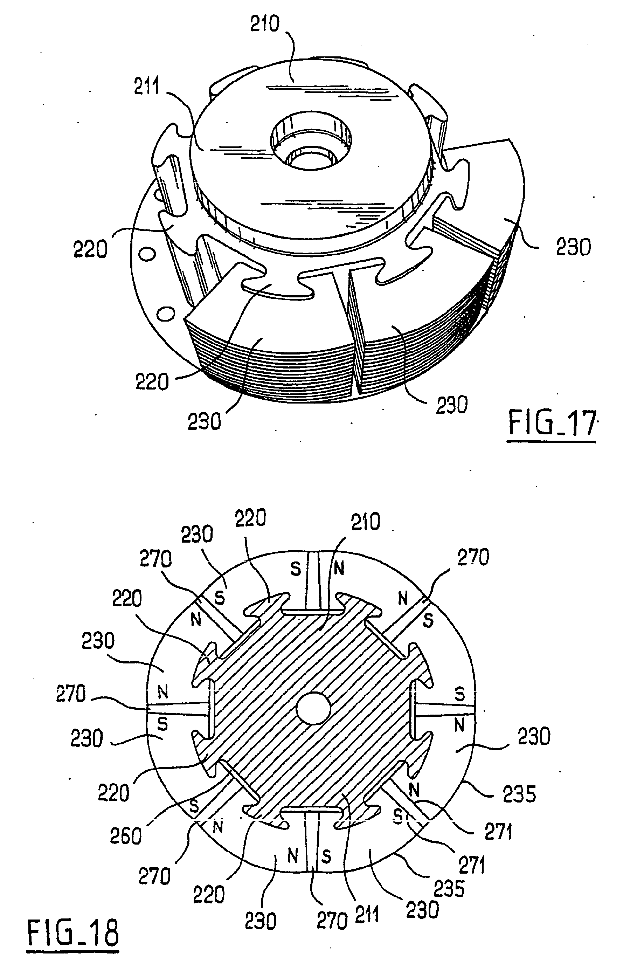

On a représenté isolément, en vue de dessus, une pièce polaire 230 sur la figure 17. Chaque pièce polaire 230 présente une découpe 250 ayant une forme adaptée à s'engager sur une nervure 220, par coulissement parallèlement à l'axe de rotation du rotor. Les nervures 220 sont réalisées d'un seul tenant avec la partie centrale 211, en aluminium, par usinage dans l'exemple considéré mais d'autres techniques tels que le tréfilage ou l'injection pourraient être utilisées. On remarquera que les pièces polaires 230, dans l'exemple décrit, ne sont pas engagées sur autre chose que les nervures de l'arbre. Les nervures 220 pourraient être remplacées par des barreaux rapportés, rendus solidaires de joues d'extrémités, lorsque le rotor est relativement court ou n'est pas destiné à tourner à une vitesse élevée.

Dans l'exemple de réalisation représenté, la découpe 250 est symétrique par rapport à un plan médian passant par son milieu et contenant un rayon. Elle comporte un fond 251 qui est destiné à venir au contact de la face radialement extérieure 221 de la nervure 220 correspondante. Le fond 251 se raccorde à des côtés opposés 252, présentant chacun une première partie arrondie 252a, de rayon de courbure Rₐ, une partie intermédiaire rectiligne oblique 252b faisant un angle non nul ii avec le rayon passant par le milieu du fond 251 et une deuxième partie arrondie 252c, de rayon de courbure R_{c}. Dans l'exemple de réalisation décrit, Rₐ vaut 3mm, R_{c} vaut 5mm et l'angle ii vaut 70°. La découpe 250 présente une ouverture rétrécie, ce qui permet l'accrochage sur une nervure 220.

D'une manière générale, l'angle ii dépendra de la nature des matériaux employés pour réaliser l'arbre 210 et les pièces polaires 230, et pourra être déterminé par un calcul par éléments finis. La forme de la section de chaque nervure 220 est sensiblement complémentaire de celle de la découpe 252, hormis la présence d'un chanfrein 221a en bordure de la face radialement extérieure 221 de la nervure 220. Chaque côté 222 de la nervure comporte ainsi une partie arrondie 222a de même rayon de courbure Rₐ que la partie arrondie 252a, une partie rectiligne 222b parallèle à la partie 252b lorsque la pièce polaire 230 est en place sur l'arbre 210 et une partie arrondie 222c de même rayon de courbure R_{c} que la partie 252c. Les bords radialement intérieurs 233 de la pièce polaire 230, situés de part et d'autre de l'encoche 250, s'étendent en retrait des régions 213 de l'arbre 210 situées entre les nervures 220, comme on peut le voir sur les figures 17 et 18 notamment. Un espace libre 260 est ainsi ménagé entre deux nervures 220 adjacentes, les pièces polaires 230 engagées sur ces nervures et l'arbre 210.

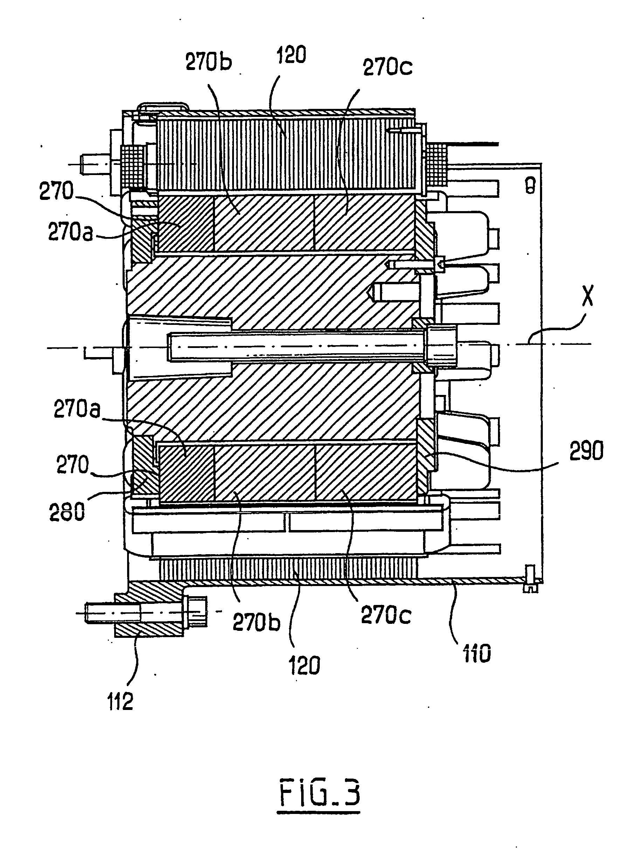

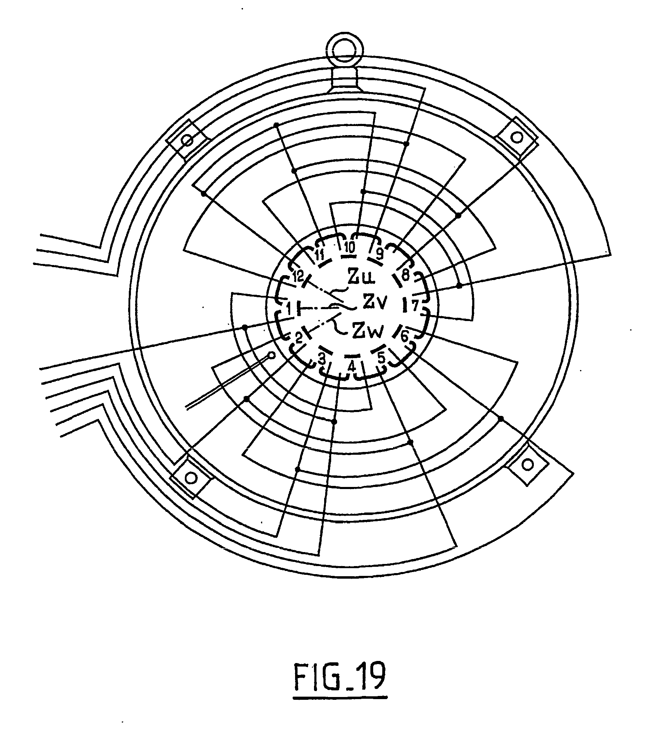

Des aimants permanents 270 de section trapézoïdale sont disposés radialement, étant insérés entre les pièces polaires 230, comme représenté sur la figure 18. Chaque aimant 270 présente, lorsque observé selon l'axe de rotation du rotor, une forme légèrement en coin, sa largeur diminuant en allant radialement vers l'extérieur. Chaque aimant 270 présente une aimantation transverse, peut être monobloc ou être constitué par plusieurs éléments magnétiques mis bout à bout. Les pôles magnétiques de même polarité de deux aimants 270 adjacents sont dirigés vers la pièce polaire 230 située entre ces aimants 270, comme illustré sur la figure 19. Dans l'exemple considéré, chaque aimant 270 est constitué par trois éléments magnétiques 270a, 270b et 270c mis bout à bout dans le sens de l'axe X de rotation du rotor, comme on peut le voir sur la figure 3. Dans l'exemple représenté, les aimants 270 s'étendent sur pratiquement toute la dimension radiale des côtés 238 des pièces polaires 230 et à leur contact.

Les aimants présentent une résistivité électrique peu élevée, mais ne sont pas soumis à un échauffement risquant de les démagnétiser, grâce à la protection conférée par les pièces polaires vis-à-vis du flux pulsant.

L'angle que font entre elles les faces planes opposées des aimants 270 venant au contact des pièces polaires 230 est relativement faible, de quelques degrés. L'angle iii entre le côté 238 d'une pièce polaire 230 et le bord 233 adjacent est égal dans l'exemple représenté à la figure 16 à 92,4°.

Le côté radialement extérieur 235 d'une pièce polaire 230 est de section transversale circulaire, de rayon de courbure inférieur au rayon maximum du rotor, de telle sorte que chaque pièce polaire 230 présente une face extérieure 235 qui forme un lobe légèrement convexe vers l'extérieur, comme on peut le voir sur la figure 18. La forme bombée des pièces polaires 230 permet de diminuer les ondulations de couple et de créer un courant d'air de refroidissement. Dans l'exemple décrit, la forme des lobes 235 et le ratio de la dimension radiale des aimants à leur largeur est choisi de manière à avoir L_{q} = L_{d}, de sorte que le moteur tourne sans effet de réluctance. L_{d} est l'inductance dans l'axe direct et L_{q} l'inductance dans l'axe en quadrature (notations conventionnelles).

Les pièces polaires 230 sont agencées de manière à ce que les logements formés entre elles, et dans lesquels sont placés les aimants 270, tendent à s'élargir sous l'effet de la force centrifuge lorsque le rotor 200 tourne à une vitesse supérieure à une vitesse prédéterminée, cet élargissement tendant à diminuer lorsque la vitesse de rotation diminue.

Les aimants 270 ont une dimension radiale choisie de telle sorte que lorsqu'ils sont mis en place dans les logements correspondants du rotor, leur extrémité radialement extérieure se situe en retrait du bord radialement extérieur, adjacent aux aimants, des pièces polaires.

Les aimants 270 sont agencés pour s'engager dans les intervalles formés par l'élargissement des logements précités lorsque le rotor tourne à une vitesse supérieure à ladite vitesse prédéterminée, de sorte que les pièces polaires 230 enserrent les aimants 270 lorsque la vitesse du rotor redescend en deçà de ladite vitesse prédéterminée. La présence des espaces 260 facilite la mise en place des aimants 270. On comprend que l'on dispose ainsi d'un moyen simple et efficace pour assujettir les aimants 270 aux pièces polaires 230. Pour fixer les aimants 270, on peut faire tourner le rotor 200 à une vitesse par exemple supérieure de 10 % à sa vitesse de rotation nominale, voire à une vitesse supérieure de 20 % à celle-ci. Les aimants 270 sont facilement mis en place, puisqu'il n'est pas nécessaire de les insérer initialement entre les pièces polaires 230 avec une force importante, la mise en position définitive des aimants 270 s'effectuant d'elle-même lorsque le rotor 200 est entraîné en rotation. De plus, en faisant tourner plus ou moins vite le rotor, on peut obtenir un déplacement plus ou moins grand des pièces polaires 230 et des aimants 270 et agir légèrement sur le diamètre extérieur du rotor. Cela peut permettre de réaliser les aimants 270 et les pièces polaires 230, ainsi que le stator 100, avec des tolérances de fabrication plus larges, puisqu'il est possible d'ajuster le diamètre extérieur du rotor 200 à une valeur souhaitée en le faisant tourner plus ou moins vite.

Les aimants 270 présentent une résistivité électrique peu élevée, mais ne sont pas soumis à un échauffement risquant de les démagnétiser grâce à la protection conférée vis-à-vis du flux pulsant par les pièces polaires 230, aux vitesses élevées.

La forme en coin des aimants 270 permet d'exercer sur les parties des pièces polaires 230 qui enserrent les nervures 220 des forces de compression qui tendent à refermer les découpes 250 sur les nervures 220, et ce d'autant plus que la vitesse est élevée, de sorte que l'ensemble est auto bloquant. Les forces de compression précitées permettent de réduire la largeur des parties des pièces polaires situées de part et d'autre d'une nervure, donc de bénéficier d'une largeur plus importante au niveau du raccordement de la nervure à l'arbre et d'utiliser pour réaliser cette dernière un matériau moins résistant mécaniquement que l'acier amagnétique, mais moins coûteux et plus léger, tel que l'aluminium.

Des joues d'extrémités 280 et 290 sont fixées sur l'arbre 210 de part et d'autre de celui-ci, pour bloquer axialement les pièces polaires 230 et les aimants 270. Ces joues définissent un étage de la machine. Le rotor 200 peut comporter plusieurs étages séparés par des joues intermédiaires et le nombre d'aimants 270 par étage peut être compris par exemple entre 4 et 64, pouvant être égal à 8 comme dans l'exemple représenté pour un moteur 8 pôles. Lorsque plusieurs étages sont utilisés et sont séparés par des joues intermédiaires, le nombre de joues sera de préférence égal au nombre des étages plus un.

Les joues 280, 290 peuvent être réalisées par exemple en aluminium ou en acier amagnétique. Les joues sont fixées sur l'arbre 210 au moyen de boulons 281. Des taraudages 500 sont réalisés sur les joues 280, 290, à leur périphérie, pour permettre la fixation de vis d'équilibrage.

Comme on peut le voir sur la figure 13 notamment, la joue 280 présente un bord radialement extérieur 282 circulaire, situé en retrait du bord radialement extérieur 235 des pièces polaires 230 et du bord radialement extérieur des aimants 270, lequel se situe sensiblement au niveau des extrémités 235a des faces bombées.

Une zone annulaire A est ainsi ménagée autour de la joue 280, permettant la lecture du champ magnétique des aimants 270 du rotor au moyen de détecteurs 190 que l'on peut voir sur la figure 4. On voit sur cette figure 4 que les détecteurs 190 peuvent recouvrir légèrement le rotor 200, grâce au positionnement en retrait de la joue 280.

Ces détecteurs 190 sont, dans l'exemple de réalisation décrit, au nombre de trois, le moteur étant triphasé, et comprennent chacun un capteur à effet Hall agencé pour détecter le champ magnétique au-dessus de la région périphérique A du rotor 200, autour de la joue 280. La lecture du champ magnétique se fait selon un axe parallèle à l'axe de rotation du rotor, le capteur à effet Hall venant en recouvrement de la région périphérique A. Les détecteurs 190 sont montés sur trois dents consécutives 130 d'axes respectifs Zᵤ, Zᵥ et Z_{w}, situées au voisinage de l'ouïe 111.

On voit sur la figure 4 que les détecteurs 190 peuvent recouvrir légèrement le rotor 200, grâce au positionnement en retrait de la joue 280.

Chaque détecteur 190 est fixé par une vis 191 sur une dent 130 du stator, cette vis 191 étant engagée dans un trou 125. Chaque détecteur 190 s'étend, comme on peut le voir sur la figure 4, suivant l'axe radial Zᵤ, Zᵥ ou Z_{w} de la dent associée et traverse la bobine 340 engagée sur cette dent. Les bobines 340 présentent à cet effet une section intérieure dont la longueur est suffisamment grande pour permettre le passage du détecteur 190. L'espace ménagé entre une bobine et la dent correspondante pour le passage du détecteur peut être de l'ordre de 5 mm, par exemple, un tel espace permettant d'isoler la bobine et la dent là où il n'y a pas d'isolant 349.

La lecture directe du champ magnétique des aimants permanents 270 est avantageuse parce qu'elle permet d'éviter d'avoir à rapporter sur le rotor des éléments spécifiques servant uniquement à la lecture de la position angulaire du rotor. La fabrication du rotor s'en trouve simplifiée et la fiabilité renforcée. De plus, le montage des détecteurs 190 dans l'espace compris entre les bobines 340 et les dents 130 s'avère particulièrement compact, tout en permettant un accès aisé aux détecteurs 190 afin de les remplacer, si nécessaire.

Chaque détecteur 190 est positionné à l'intérieur d'une bobine 340 de phase donnée. Chaque détecteur 190 permet de détecter quelle polarité du rotor se situe en face de la bobine associée (et donc de la phase concernée) à un instant donné. Chaque détecteur 190 délivre un signal bas ou haut selon la polarité détectée. Chaque détecteur 190 comporte un circuit électronique de mise en forme des signaux délivrés par le capteur à effet Hall, afin de réduire la sensibilité aux parasites. Selon la position du rotor, il y a six possibilités de combinaison des différents signaux délivrés par les détecteurs 190, chaque changement de triplet constitué par les états des détecteurs correspondant à une position angulaire déterminée du rotor. On peut ainsi connaître, à des instants précis, la position angulaire du rotor, et calculer par interpolation la position du rotor entre ces instants, connaissant sa vitesse. L'excitation des bobinages peut ainsi s'effectuer de manière optimale, avec le déphasage souhaité. Le courant dans chaque bobine peut ainsi s'annuler en changeant de sens lorsqu'un aimant se trouve dans l'axe de la dent correspondante. A la différence d'un moteur à réluctance, qui ne travaille qu'en attraction, le moteur qui vient d'être décrit travaille en attraction et en répulsion et permet de générer un couple plus important.

Chaque détecteur 190 comporte en outre un capteur de température.

La connaissance des températures des bobines 340 des différentes phases permet de détecter un éventuel dysfonctionnement du moteur.

Le rotor 200 comporte, sur l'une au moins des joues 280 et 290, des ailettes 291 de refroidissement, visibles sur la figure 1 notamment. On notera qu'une action de refroidissement supplémentaire est obtenue grâce à la présence des lobes 235 formés par les pièces polaires 230 à la périphérie du rotor, qui permettent de générer un courant d'air de refroidissement au coeur même du moteur.

Le moteur qui vient d'être décrit de manière détaillée présente de très nombreux avantages, à savoir :
- sa structure particulièrement compacte permet de le monter en porte-à-faux à l'extrémité d'un arbre, donc de diminuer le nombre de roulements et les pertes mécaniques par friction, ainsi que les problèmes de lubrification,
- le rotor peut tourner à une vitesse de rotation élevée sans craindre un détachement des aimants ni un échauffement excessif de ces derniers, ceux-ci étant peu exposés aux courants induits de surface,
- les bobines individuelles peuvent être aisément mises en place et remplacées, sans avoir à procéder à une réimprégnation du stator,
- la masse des aimants est relativement faible, et il n'est pas nécessaire de les fractionner,
- le nombre de dents et de bobines est relativement faible, ce qui facilite la fabrication,
- les têtes de bobines sont très courtes, ce qui permet d'obtenir un faible encombrement axial,
- les phases sont bien séparées électriquement, sans contacts ni croisements,
- les spires des bobines sont bien jointives, ce qui permet un bon remplissage des encoches,
- les ondulations de couple peuvent être rendues négligeables.

L'invention n'est pas limitée à un moteur synchrone et s'applique également à la fabrication d'une génératrice. Le rotor peut être intérieur ou extérieur.

La puissance électrique de la machine peut être comprise par exemple entre 1 et 750 kW. La vitesse de rotation du rotor peut être comprise par exemple entre 1000 et 10000 trs/mn. Une machine conforme à l'invention peut trouver également des applications lorsque la vitesse est inférieure à 1000 trs/mn. Le diamètre extérieur de la machine peut être compris par exemple entre 50 mm et 1 m ; dans les applications les plus courantes, le diamètre extérieur pourra être compris entre 100 et 600 mm.

L'invention n'est pas limitée à un nombre de pôles particuliers ni à l'alimentation du stator avec du courant triphasé. Le courant peut être polyphasé à nₚₕₐₛₑₛ phases, n différent de trois.

L'arbre peut être réalisé dans d'autres matériaux amagnétiques que l'aluminium, par exemple des alliages d'aluminium.

Bien que cela soit moins avantageux, des aimants parallélépipédiques ou ayant d'autres formes encore pourraient être utilisés, éventuellement en combinaison avec des aimants en forme de coin.

Les dents du stator pourraient présenter une face tournée vers le rotor autre que cylindrique de révolution autour de l'axe du rotor.

Les encoches pourraient être semi-fermées.

## Revendications

1. Machine électrique, comprenant un stator et un rotor à aimants permanents et à concentration de flux, les aimants permanents (270) étant engagés entre des pièces polaires (230), et la machine comportant au moins un détecteur (190) de champ magnétique, monté sur le stator de manière à détecter le champ magnétique des aimants (270) du rotor en un emplacement venant en recouvrement, lorsque la machine est observée selon l'axe de rotation du rotor, d'une région périphérique (A) du rotor (200) la lecture du champ magnétique se faisant selon un axe parallèle à l'axe de rotation du rotor.

2. Machine selon la revendication 1, **caractérisée par le fait que** le courant d'alimentation du moteur est polyphasé, à n phases, et **par le fait que** le moteur comporte n détecteurs (190) fixés sur des dents (130) du stator (100).

3. Machine selon la revendication 2, **caractérisée par le fait que** lesdites dents (130) sont des dents consécutives.

4. Machine selon la revendication 3, **caractérisée par le fait que** les détecteurs (190) sont regroupés en regard d'une ouïe (111) du carter de la machine.

5. Machine selon l'une quelconque des revendications précédentes, **caractérisée par le fait que** les détecteurs (190) sont fixés sur une extrémité axiale du circuit magnétique du stator.

6. Machine selon l'une quelconque des revendications précédentes, **caractérisée par le fait que** chaque détecteur (190) s'étend selon l'axe radial (Zᵤ ; Zᵥ; Z_{w}) d'une dent (130).

7. Machine selon l'une quelconque des revendications précédentes, **caractérisée par le fait que** chaque détecteur (190) comporte un capteur à effet Hall.

8. Machine selon l'une quelconque des revendications précédentes, **caractérisée par le fait que** chaque dent (130) du stator reçoit une bobine individuelle (340).

9. Machine selon la revendication précédente, **caractérisée par le fait que** ladite bobine individuelle (340) comporte un faisceau (341) de fils (342) isolés, ce faisceau étant sensiblement plat et enroulé autour d'un axe géométrique d'enroulement (W) de manière à former une pluralité de spires superposées, la section transversale du faisceau, au niveau des spires superposées, ayant une grande dimension orientée sensiblement perpendiculairement à l'axe d'enroulement (W) de la bobine.

10. Machine selon l'une des revendications 8 et 9, **caractérisée par le fait que** la bobine individuelle (340) ménage avec la dent (130) un espace permettant le passage du détecteur (190) ou de conducteurs électriques reliés à ce détecteur.

11. Machine selon l'une quelconque des revendications précédentes, **caractérisée par le fait que** le rotor comporte au moins une joue (280) en un matériau amagnétique, le bord radialement extérieur de cette joue s'étendant en retrait du bord radialement extérieur des aimants (270) et des pièces polaires (230), de manière à ménager une région annulaire (A) dans laquelle le champ magnétique peut être détecté par le ou les détecteurs (190).

## Claims

1. An electric machine, comprising a stator and a permanent magnet flux-concentrating rotor, the permanent magnets (270) being engaged between pole pieces (230) and the machine comprising at least one magnetic-field detector (190) mounted on the stator in such a manner as to detest a magnetic field of the permanent magnets (270) of the rotor in a location that overlaps a peripheral region (A) of the rotor (200) when the machine is observed on the axis of rotation of said rotor, the reading of the magnetic field being done along an axis parallel to the axis of rotation of the rotor.

2. machine according to claim 1, wherein power supply to said motor is polyphase electricity having n phases, and wherein said motor comprises n detectors (190) fixed on teeth (130) of the stator (100),

3. A machine according to claim 2, wherein said teeth (130) are consecutive teeth.

4. A machine according to claim 3, wherein said detectors (190) are grouped together facing an opening (111) in the case of the machine.

5. A machine according to any preceding claim, wherein said detectors (190) are fixed on one axial end of the magnetic circuit of the stator.

6. A machine according to any preceding claim, wherein each detector (190) extends along a radial axis (Zᵤ; Zᵥ; z_{w}) of a tooth (130).

7. A machine according to any preceding claim, wherein each detector (190) comprises a Hall effect sensor.

8. A machine according to any preceding claim, wherein each tooth (130) of said stator receives an individual coil (340).

9. A machine according to the preceding claim, wherein said individual coil (340) comprises a bundle (341) of insulated wires (342), the bundle being substantially flat and wound around a winding axis (W) in such a manner as to form a plurality of superposed turns, said bundle having a cross-section in the superposed turns which has a long dimension that extends substantially perpendicularly to said winding axis (W) of the coil.

10. A machine according to claim 8 or claim 9, wherein the individual coil (340) co-operates with the tooth (130) to leave a gap which receives the detector (190) and electrical conductors connected to said detector.

11. A machine according to any preceding claim, wherein the rotor comprises at least one cheek-plate (280) made of a non-magnetic material, said cheek-plate having an outside radial edge extending slightly set-back from the outside radial edges of the magnets (270) and of the pole pieces (230) in such a manner as to provide an annular region (A) in which said magnetic field can be detected by said at least one magnetic field detector (190).

## Patentansprüche

1. Elektrische Maschine mit einem Stator und einem Rotor mit Permanentmagneten und Flusskonzentration, wobei die Permanentmagnete (270) zwischen Polstücken (230) eingerichtet sind und die Maschine wenigstens einen Magnetfelddetektor (190) aufweist, der so an dem Stator angebracht ist, dass er das Magnetfeld der Magneten (270) des Rotors an einer Einbaustelle erfasst, die bei Betrachtung der Maschine entlang der Rotationsachse des Rotors mit einer Umfangsregion (A) des Rotors (200) in Überdeckung kommt, wobei das Auslesen des Magnetfelds längs einer Achse parallel zu der Rotationsachse des Rotors erfolgt.

2. Maschine nach Anspruch 1, **dadurch gekennzeichnet, dass** der Versorgungsstrom des Motors mehrphasig mit n Phasen ist, und dadurch, dass der Motor n Detektoren (190) aufweist, die an Zähnen (130) des Stators (100) befestigt sind.

3. Maschine nach anspruch 2, **dadurch gekennzeichnet, dass** die Zähne (130) fortlaufende Zähne sind.

4. Maschine nach Anspruch 3, **dadurch gekennzeichnet, dass** die Detektoren (190) gegenüber einer Öffnung (111) des Maschinengehäuses angeordnet sind.

5. Maschine nach einem der vorstehenden Ansprüche, **dadurch gekennzeichnet, dass** die Detektoren (190) an einem axialen Ende der Magnetschaltung des Stators befestigt sind.

6. Maschine nach einem der vorstehenden Ansprüche, **dadurch gekennzeichnet, dass** sich jeder Detektor (190) längs der radialen Achse (Zᵤ; Zᵥ; Z_{w}) eines Zahns (130) erstreckt.

7. Maschine nach einem der vorstehenden Anspüche, **dadurch gekennzeichnet, dass** jeder Detektor (190) einen Halleffekt-Sensor aufweist,

8. Maschine nach einem der vorstehenden Ansprüche, **dadurch gekennzeichnet, dass** jeder Zahn (130) des Stators eine einzelne Spule (340) aufnimmt.

9. Maschine nach dem vorstehenden Anspruch, **dadurch gekennzeichnet, dass** die einzelne Spule (340) ein Bündel (341) isolierter Drähte (342) aufweist, wobei dieses Bündel im Wesentlichen flach und um eine geometrische Wicklungsachse (W) gewickelt ist, so dass es mehrere überlagerte Windungen bildet, wobei der Querschnitt des Bündels auf der Höhe der überlagerten Windungen eine große Abmessung aufweist, die im Wesentlichen senkrecht zur Wicklungsachse (W) der Spule orientiert ist.

10. Maschine nach Anspruch 8 oder 9, **dadurch gekennzeichnet, dass** die einzelne Spule (340) mit dem Zahn (130) einen Raum bereitstellt, der den Durchgang des Detektors (190) oder von an diesem angefugten elektrischen Leitern erlaubt.

11. Maschine nach einem der vorstehenden Ansprüche, **dadurch gekennzeichnet, dass** der Rotor wenigstens eine Wange (280) aus nicht-magnetischem Material aufweist, wobei der äußere radiale Rand dieser Wange sich im Hintergrund des äußeren radialen Rands der Magneten (270) und der polstücke (230) erstreckt, um eine ringförmige Region (A) zu bilden, in der das Magnetfeld durch den oder die Detektoren (190) erfasst werden kann.
